# EUROPÄISCHE PATENTANMELDUNG

(11) **EP 3 016 054 A1**
(43) Veröffentlichungstag der Anmeldung: **04.05.2016**
(21) Anmeldenummer: 15180381.4
(22) Anmeldetag: 10.08.2015
(51) Int. Cl.: G06Q 30/02

(54) **VERFAHREN ZUM AUSLIEFERN VON WERBEINHALTEN UND/ODER WERBEMITTELN SOWIE KOMMUNIKATIONSSYSTEM ZUR DURCHFÜHRUNG DES VERFAHRENS**

(30) Priorität: 30.10.2014 DE 102014016137
(71) Anmelder: ProSiebenSat.1 Digital GmbH, 85774 Unterföhring (DE)
(72) Erfinder: Gritsch, Marc, 81545 München (DE); Bartsch, Horst, 10405 Berlin (DE)
(74) Vertreter: Herrmann, Uwe

(57) **Zusammenfassung**

Die Erfindung betrifft ein Verfahren zum Ausliefern von Werbeinhalten und/oder Werbemitteln von einem Werbemittelserver an eine Clienteinrichtung, wobei die Clienteinrichtung eine Anfrage nach Werbeinhalten und/oder Werbemitteln über eine initiierte Flashsocket-Verbindung an einen Flashsocket-Server übermittelt, der Flashsocket-Sever mit dem in der Anfrage adressierten Werbemittelserver kommuniziert, um eine Übertragung der von der Clienteinrichtung angefragten Werbeinhalte und/oder Werbemittel anzustoßen und wobei die Übertragung der abgefragten Werbeinhalte und/oder Werbemittel von dem Werbemittelserver an die Clienteinrichtung über den Flashsocket-Server und die zwischen Flashsocket-Server und Clienteinrichtung aufgebaute Flashsocket-Verbindung erfolgt und/oder die Übertragung der Werbeinhalte und/oder Werbemittel an wenigstens einen Drittserver erfolgt, von dem die Werbemittel und/oder Werbeinhalte durch die Clienteinrichtung abrufbar sind.

## Beschreibung

Die Erfindung betrifft ein Verfahren zum Ausliefern von Werbeinhalten und/oder Werbemitteln von einem Werbemittelserver an eine Clienteinrichtung. Die Erfindung umfasst zudem ein Kommunikationssystem zur Durchführung eines derartigen Verfahrens.

Ein Großteil der über das Internet publizierten Informationsinhalte ist kostenlos und wird vom Betreiber durch Werbeeinnahmen finanziert. Dazu werden Werbeinhalte und/oder Werbemittel auf der Website des Betreibers eingeblendet, um die Aufmerksamkeit des Benutzers auf sich zu ziehen. Neben der Einblendung von statischem Bildmaterial, das einfach in den anzuzeigenden HTML-Code der Website eingebettet wird, gewinnt das Einspielen von ganzen Werbefilmen während der Videowiedergabe immer mehr an Bedeutung. Der Nutzer startet hierbei den gewünschten Videoinhalt, wobei ihm vorab, währenddessen oder am Ende des Videoinhaltes ein Werbefilm angezeigt wird. Das Abspielen von Videoinhalt und Werbematerial erfolgt in der Regel über dieselbe Playersoftware am Nutzerendgerät.

In der Regel ist es sinnvoll die Werbeinhalte auf Zielgruppen zuzuschneiden, denn der Nutzer wird nur die für ihn interessanten Werbeinhalte beachten und deren Einblendung akzeptieren. Diese Vorgehensweise wird im Fachjargon auch als "Targeting" bezeichnet. Für die Auslieferung auf den jeweiligen Besucher zugeschnittener Werbeinhalte werden spezielle Werbemittelserver eingesetzt, die für jeden einzelnen Nutzer aus der Werbedatenbank passende Werbemittel bzw. Werbeinhalte heraussuchen und an das Endgerät des Nutzers ausliefern. In der Regel erhält die Clienteinrichtung beim Abruf eines Informationsservers Instruktionen zusammen mit einer Zieladresse eines Werbemittelservers. Die Clienteinrichtung kontaktiert daraufhin automatisch den verlinkten Werbemittelserver und ruft die zur Verfügung stehenden Werbemittel bzw. Werbeinhalte ab. Beim Surfen auf einer Website kommuniziert der Webbrowser des Nutzers automatisch mit dem Werbemittelserver.

Aus Sicht des Websitenbetreibers besteht das Bedürfnis, solche Werbeauslieferungen möglichst vollständig und fehlerfrei durchzuführen, um ausreichend Einnahmen für das kostenlose Angebot erwirtschaften zu können. Derzeit befinden sich auf dem Markt etwaige Softwareprogramme zur Installation auf dem Endgerät des Nutzers, die ausgehende Werbeanfragen überwachen und gegebenenfalls blockieren, wodurch das Einblenden von etwaigen Werbemitteln und Werbeinhalten unterdrückt wird. Diese Software-Tools, auch Werbeblocker genannten, prüfen ausgehende Verbindungsversuche der Clienteinrichtung daraufhin, ob diese an einen bekannten Werbemittelserver gerichtet sind. Dazu werden Filterlisten eingesetzt, die bekannte Zieladressen von Werbemittelservern beinhalten. Sofern ein ausgehender Verbindungsaufbau an eine bekannte Zieladresse eines Werbemittelservers gerichtet ist, wird diese aktiv durch das installierte Software-Tool verhindert und dadurch der Abruf von Werbemitteln bzw. Werbeinhalten unterbunden. Zum Erkennen einer ausgehenden Verbindung an einen Werbeserver können auch bereits Keywords wie "Werbung" oder "Ad" innerhalb der Adresse ausreichen.

Die vorliegende Erfindung setzt sich daher zur Aufgabe, Möglichkeiten aufzuzeigen, die eine fehlerfreie Auslieferung von Werbemitteln bzw. Werbeinhalten trotz entsprechend installierter Software sicherstellen.

Gelöst wird diese Aufgabe zum einen durch ein Verfahren gemäß den Merkmalen des Anspruchs 1. Vorteilhafte Ausgestaltungen des Verfahrens sind Gegenstand der abhängigen Ansprüche 2 bis 11.

Gemäß Anspruch 1 wird ein Verfahren zum Ausliefern von Werbeinhalten und/oder Werbemitteln von einem Werbemittelserver an eine Clienteinrichtung vorgeschlagen, wobei in einem ersten Schritt die Clienteinrichtung eine Anfrage nach Werbeinhalten und/oder Werbemitteln über eine initiierte Flashsocket-Verbindung an einen Flashsocket-Server übermittelt. Eine entsprechende Anfrage wird beispielsweise dadurch ausgelöst, dass die Clienteinrichtung nutzergesteuert Informationen von einem Informationsserver abrufen möchte. Bevorzugt wird die Clienteinrichtung in so einem Fall durch die von dem Informationsserver bereitgestellten Informationen instruiert, eine Anfrage nach Werbeinhalten oder Werbemitteln über eine speziell dazu aufgebaute Flashsocket-Verbindung an den Flashsocket-Server zu übermitteln.

Unter einer Flashsocket-Verbindung wird eine Socketverbindung verstanden, die durch eine Flashanwendung bzw. ein Flashplugin/Flashmodul geöffnet wird. Als Flashanwendung gilt beispielsweise ein Flashvideoplayer. Als Flashsocket-Server wird ein Server, beispielsweise Webserver verwendet, der zum Aufbau einer entsprechend Flashsocket-Verbindung mit der Clienteinrichtung geeignet ist.

In einem weiteren Verfahrensschritt ist vorgesehen, dass der Flashsocket-Server mit dem in der Anfrage adressierten Werbemittelserver kommuniziert, um eine Übertragung der von der Clienteinrichtung angefragten Werbeinhalte und/oder Werbemittel anzustoßen. Diese Kommunikation kann auf Seite des Flashsocket-Servers darin bestehen, die empfangene Anfrage der Clienteinrichtung an den Werbemittelserver weiterzuleiten. Der Flashsocket-Server kann jedoch ebenfalls die Anfrage überarbeiten und eine modifizierte Anfrage weiterleiten.

Gemäß einer ersten Option der Erfindung kann vorgesehen sein, dass die Übertragung der angefragten Werbeinhalte und/oder Werbemittel von dem Werbemittelserver an die Clienteinrichtung über den zwischengeschalteten Flashsocket-Server und die zwischen Flashsocket-Server und Clienteinrichtung aufgebaute Flashsocket-Verbindung erfolgt.

Üblicherweise überprüfen installierte Werbeblocker bestimmte Verbindungstypen und blockieren diese. Durch die Verwendung einer Flashsocket-Verbindung zwischen der Clienteinrichtung und einem Flashsocket-Server können diese Softwareprogramme ausgehende Anfragen jedoch nicht mehr erkennen und die Werbungsauslieferung kann sichergestellt werden.

Die eingangs vorgestellten Werbeblocker werden üblicherweise als Plug-Ins für die Browsersoftware des Nutzers zur Verfügung gestellt. Die Verwendung einer Flashsocket-Verbindung zur Anfrage nach Werbemitteln bzw. Werbeinhalten hat zudem den Vorteil, dass diese Anfrage nicht mehr von der Browsersoftware initiiert wird, sondern stattdessen von einer anderweitigen auf der Clienteinrichtung ablaufenden Anwendung, beispielsweise dem Flashplayer. Werbeblocker in Form von Plug-Ins für Webbrowser haben nur Zugriff auf die Routinen des Webbrowsers, können also nur ausgehende Verbindungsversuche der Browseranwendung selbst prüfen. Auf parallel ablaufenden Anwendungen haben die Plug-Ins weder Zugriff noch Möglichkeiten zur Überwachung.

Weiterhin kann vorgesehen sein, dass zusätzlich oder alternativ die Übertragung der Werbeinhalte und/oder Werbemittel nicht über den Flashsocket-Server zur Clienteinrichtung erfolgt, sondern die Werbemittel/Werbeinhalte von dem Werbemittelserver mittelbar oder unmittelbar an wenigstens einen Drittserver übertragen werden, von dem die Werbemittel und/oder Werbeinhalte durch die Clienteinrichtung abrufbar sind. Diese Vorgehensweise ist insbesondere dann praktikabel, wenn die Zieladressen ausgehender Verbindungen der Clienteinrichtung gegen Adressen bekannter Werbemittelserver gefiltert werden. Dadurch, dass die angefragten Werbemittel und/oder Werbeinhalte von dem eigentlichen Werbemittelserver auf einen Drittserver übertragen werden, ändert sich die Abrufadresse für Werbemittel/Werbeinhalte für die Clienteinrichtung. Eine Adressfilterung eines aktiven Werbeblockers wird somit geschickt ausgehebelt.

Besonders bevorzugt ist es, wenn eine auf der Clienteinrichtung ausgeführte Flashanwendung, insbesondere ein Flashplayer, die Verbindung zum Flashsocket-Server initiiert.

Der Flashsocket-Server selbst kann eine eigene Hardware-Architektur umfassen oder aber optional als zusätzliches Softwaremodul auf dem eigentlichen Werbemittelserver installiert sein. Denkbar ist jede Hardware-Struktur, die zur Ausführung eines Flashsocket-Servers geeignet ist, um entsprechende Anfragen einer Clienteinrichtung beantworten und weiter bearbeiten zu können.

In einer besonders bevorzugten Ausgestaltung der Erfindung wird vor dem Aufbau der Flashsocket-Verbindung durch die Clienteinrichtung, insbesondere dem Flashplayer, ein Authentifizierungsprozess angestoßen um eine Authentifizierung des anfragenden Flashmoduls - auch crossdomain check genannt - zu ermöglichen. Dadurch wird zunächst überprüft, ob die notwendige Berechtigung der Clienteinrichtung zum Aufbau einer Flashsocket-Verbindung zu dem Flashsocket-Server besteht. Durch diese Maßnahme wird der Flashsocket-Server vor Angriffen aus dem öffentlichen Internet geschützt, da nur solche Anfragen für mögliche Socketverbindungen bearbeitet werden, die aufgrund einer Verifizierungsdatei dazu berechtigt sind.

Eine Flashsocket-Verbindung basiert vorzugsweise auf einem TCP-Socket. Denkbar ist es, dass lediglich die Verbindung zwischen Clienteinrichtung und Flashsocket-Server auf einer Flashsocket-Verbindung basiert. Die übrige Kommunikation zwischen Flashsocket-Server und Werbemittelserver bzw. anderweitigen Komponenten kann ohne Socketverbindung erfolgen, es spricht jedoch nichts gegen eine Socketverbindung.

In einer besonders vorteilhaften Ausführungsvariante des erfindungsgemäßen Verfahrens ist vorgesehen, dass eine durch den Flashsocket-Server angestoßene Übertragung der Werbemittel bzw. Werbeinhalte dazu führt, dass diese von dem Werbemittelserver auf einen Drittserver übertragen werden, wobei der Drittserver dem ursprünglichen Informationsserver bzw. Webserver entspricht, von dem die Clienteinrichtung nutzergesteuert gewünschte Informationen abrufen möchte. Die Übertragung vom Werbemittelserver an den Drittserver als Informationsserver kann entweder unmittelbar oder mittelbar erfolgen, beispielsweise über den Flashsocket-Server oder über einen weiteren zwischengeschalteten Server als temporäreren Speicherplatz.

Entspricht der Drittserver dem Informationsserver/Webserver, dann liegen Informationsinhalte und auszuliefernde Werbeinhalte/Werbemittel auf identischen Servern mit gleicher Zieladresse. Ein aktiver Werbeblocker könnte zwar auch Verbindungsversuche mit dem Informationsserver/Webserver unterdrücken, in diesem Fall könnten jedoch auch nutzerseitig gewünschte Informationen nicht mehr abgerufen werden, was aus Nutzersicht vermutlich inakzeptabel ist und vermutlich zur Deaktivierung der Blockersoftware führen würde.

Bevorzugt werden die angeforderten Werbemittel und/oder Werbeinhalte vom Werbemittelserver an den Flashsocket-Server per progressiven Download-Verfahren übertragen, während die Übermittlung vom Flashsocket-Server an den Informationsserver per FTP-Protokoll, idealerweise über eine verschlüsselte FTP-Verbindung erfolgt.

Um unnötigen Datenverkehr im Kommunikationssystem zu vermeiden, ist es vorteilhaft, wenn der Flashsocket-Server bei einer eingehenden Anfrage einer Clienteinrichtung zunächst prüft, ob die angefragten Werbeinhalte und/oder Werbemittel bereits auf dem Drittserver bzw. auf dem Flashsocket-Server verfügbar sind, sodass eine erneute Datenübertragung vermieden werden kann. In diesem Fall wir eine Übertragung an den Drittserver bzw. an den Flashsocket-Server vom Werbemittelserver nur dann initiiert, falls die angefragten Werbeinhalte und/oder Werbemittel noch nicht verfügbar sind.

Denkbar ist es ebenfalls, die in der Anfrage der Clienteinrichtung enthaltene Zieladresse eines Werbemittelservers vor der weiteren Verfahrensausführung im Flashsocket-Server oder der Clienteinrichtung selbst zunächst gegen eine White- und/oder Blacklist zu prüfen, wobei derartige Listen entweder validierte und/oder gesperrte Werbemittelserver beinhalten. Dadurch können unseriöse Anfragen nach Werbemitteln und/oder Werbeinhalten erkannt und gegebenenfalls im Ermessen des Betreibers des Informationsangebotes blockiert werden, um dieses nicht unnötig in Verruf wegen unseriöser Werbeanbieter zu bringen.

Zusätzlich oder alternativ zur Black- oder Whitelist kann es vorgesehen sein, dass der Flashsocket-Server für jede eingehende Anfrage einen Authentifizierungstoken fordert, um DDOS-Attacken zu verhindern und nur zulässige Clients zu unterstützen. Denkbar ist es ebenfalls, dass die initiale Werbemittelanfrage eines Clients mittels der Black-/Whitelist authentifiziert wird, während alle nachfolgenden Anfragen des Clients mittels angefügtem Authentifizierungstokens gesichert sind.

In Reaktion auf eine Anfrage der Clienteinrichtung nach Werbeinhalten und/oder Werbemitteln kann es vorgesehen sein, dass die Clienteinrichtung im Gegenzug eine Informationsdatei über die Flashsocket-Verbindung erhält. Diese Informationsdatei enthält wenigstens eine Zieladresse zum Abruf der angefragten Werbeinhalte und/oder Werbemittel. Die Informationsdatei wird in der Regel vom Werbemittelserver in Reaktion auf eine empfangene Anfrage generiert und über den FlashsocketServer an die Clienteinrichtung weitergeleitet.

Die in der Informationsdatei enthaltene Zieladresse zum Abruf der Werbemittel entspricht der Adresse des Flashsocket-Servers und/oder der Adresse eines Drittservers, an den die angefragten Werbeinhalte und/oder Werbemittel übertragen worden sind.

Bei dem bereits bekannten Verfahren zur Auslieferung von Werbeinhalten und/oder Werbemitteln stellt die Clienteinrichtung eine entsprechende Anfrage an den Werbemittelserver, die mit einer passenden Informationsdatei des Werbemittelservers beantwortet wird, wobei der Clienteinrichtung darin mitgeteilt wird, welcher Werbeinhalt bzw. welches Werbemittel aus der Datenbank des Werbemittelservers abgerufen werden kann. Vor diesem Hintergrund ist es denkbar, dass eine entsprechende Anfrage der Clienteinrichtung an den Flashsocket-Server durch diesen gegebenenfalls modifiziert an den Werbemittelserver weitergeleitet wird, worauf der Werbemittelserver die passende Informationsdatei generiert und diese sodann an den Flashsocket-Server überträgt. In diesem Fall ist es zweckmäßig, wenn der Flashsocket-Server die darin enthaltene Zieladresse zum Abruf der angefragten Werbemittel und/oder Werbeinhalte entweder durch seine eigene Adresse ersetzt oder durch die Zieladresse des Drittservers.

Gegebenenfalls kann es vorgesehen sein, dass die generierte Informationsdatei des Werbemittelservers weitergehende Informationen bzw. Zieladressen umfasst, die mit der Auslieferung von Werbeinhalten und/oder Werbemitteln in Verbindung stehen. Da derartige Informationen bzw. Zieladressen ebenfalls durch einen installierten Werbeblocker erkannt werden könnten, müssen diese gesondert geschützt werden. Als vorteilhaft erweist es sich, wenn diese Adressen durch passende temporäre Zieladressen und/oder temporäre Parameter ersetzt werden, bevor die Informationsdatei von dem Flashsocket-Server an die Clienteinrichtung übertragen wird. Entsprechende Zieladressen können beispielsweise zu Dienstleistungsservern zeigen, die für die Überwachung und Analyse der Auslieferung von Werbeinhalten und/oder Werbemitteln zuständig sind. Stichwort in diesem Zusammenhang sind sogenannte Targeting-Dienstleistungen bzw. Frequency-Caping-Mechanismen.

In einer besonders bevorzugten Ausführungsvariante des erfindungsgemäßen Verfahrens umfassen die Werbemittel und/oder Werbeinhalte Audio- bzw. Videodaten, insbesondere Videodaten eines Werbefilms, besonders bevorzugt lineare Videodaten, die für eine PreRoll, MidRoll, PostRoll, sponsor PreSplit oder PostSplit Einblendung an der Clienteinrichtung geeignet sind.

Ein weiterer Aspekt der Erfindung betrifft ein alternatives Verfahren zum Ausliefern von Werbeinhalten und/oder Werbemitteln von einem Werbemittelserver an eine Clienteinrichtung gemäß den Merkmalen des Anspruchs 12. Gegenüber dem Verfahren aus Anspruch 1 ist statt dem Flashsocket-Server ein Proxyserver zwischen Clienteinrichtung und Werbemittelserver geschaltet, der sich gegenüber dem Flashsocket-Server lediglich dahingehend unterscheidet, dass die Verbindung zwischen Clienteinrichtung und Proxyserver nicht auf einer Socketverbindung basiert. In diesem Fall ist es jedoch notwendig, dass für den letzten Verfahrensschritt die zweite Option gewählt, wonach die Werbeinhalte und/oder Werbemittel an wenigstens einen Drittserver übertragen werden, von dem die Werbemittel und/oder Werbeinhalte durch die Clienteinrichtung abrufbar sind. Insbesondere zeichnet sich das Verfahren durch die vorgenannten Merkmale aus, die eine Übertragung an den Drittserver betreffen. Der Drittserver entspricht vorzugsweise dem Informationsserver, d.h. dem Web- oder Contentserver.

Die Vorteile und Eigenschaften dieses Verfahrens entsprechen offensichtlich denen des vorgenannten Verfahrens, weshalb an dieser Stelle auf eine wiederholende Beschreibung verzichtet wird.

Daneben betrifft die Erfindung ein Kommunikationssystem mit wenigstens einer Clienteinrichtung, wenigstens einem Flashsocket- bzw. Proxyserver, wenigstens einem Werbemittelserver und gegebenenfalls wenigstens einem Drittserver, wobei die aufgezählten Komponenten derart ausgeführt sind, so dass diese zur Ausführung des erfindungsgemäßen Verfahrens geeignet sind.

Zuletzt betrifft die Erfindung einen Proxy- bzw. Flashsocket-Server, der entsprechende Mittel zur Durchführung des Verfahrens aufweist. Sowohl das Kommunikationssystem als auch der Proxy- bzw. Flashsocket-Server weisen demnach dieselben Merkmale und Eigenschaften wie das erfindungsgemäße Verfahren auf.

Weitere Vorteile und Eigenschaften der Erfindung sollen im Folgenden anhand eines in den Zeichnungen dargestellten Ausführungsbeispiels näher erläutert werden. Es zeigen:
- Figur 1:: eine Übersicht zur Darstellung des Aufbaus des erfindungsgemäßen Kommunikationssystems und
- Figur 2:: ein Ablaufdiagramm zur Verdeutlichung der Kommunikation in Bezug auf den Austausch von Cookies.

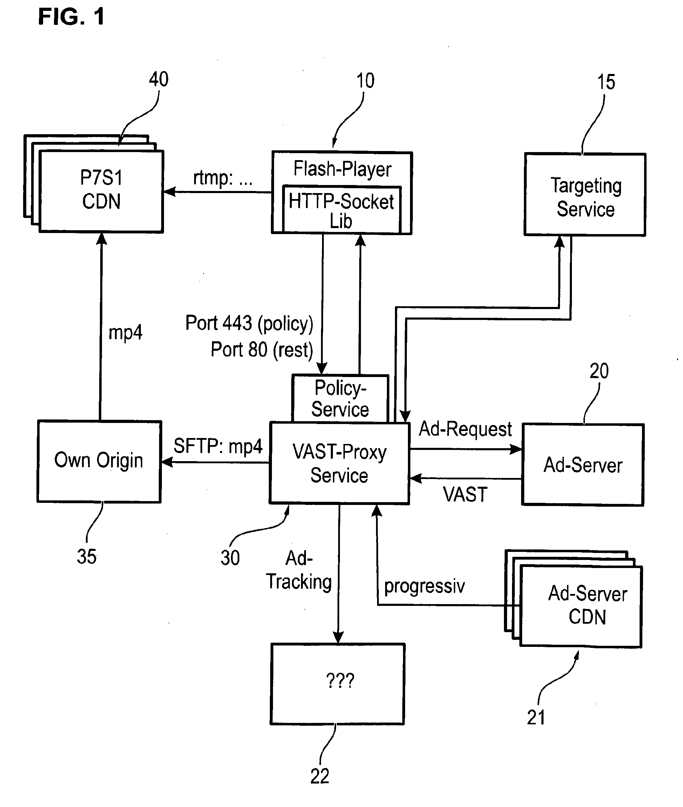

Figur 1 zeigt ein Kommunikationssystem zur Durchführung des erfindungsgemäßen Verfahrens. Die wesentlichen Komponenten des Kommunikationssystems sind der Clienteinrichtung 10, der Werbemittelserver (Ad-Server) 20 sowie der Proxyserver (VAST-Proxy Service) 30 und der Informationsserver (P7S1 CDN) 40.

Die Clienteinrichtung kann ein handelsüblicher PC, Laptop oder ein mobiles Endgerät, wie beispielsweise ein Smartphone oder Tablet-Computer, sein. Auf dem Clientgerät ist ein Abspielprogramm zur Wiedergabe von Flashvideos installiert. Das Wiedergabeprogram, im Folgenden als Flashplayer bezeichnet, kann als Plug-In für einen installierten Webbrowser des Clientgerätes 10 ausgeführt sein oder aber in Form eines eigenständigen Programms installiert und ausführbar sein.

Der Werbemittelserver 20 umfasst eine Logik, die in Abhängigkeit einer empfangenen Werbemittelanfrage die auf den individuellen Nutzer bzw. Nutzergruppen zugeschnittenen Werbeinhalten und/oder Werbemittel aus der dem Werbemittelserver zugeordneten Werbemitteldatenbank 21 auswählt. Die Datenbank 21 kann Bestandteil des Werbemittelservers 20 oder als separater Datenbankserver ausgestaltet sein. Die Datenbank 21 enthält eine Vielzahl von Werbeinhalten, beispielsweise in Form von kurzen Werbefilmen bzw. Werbespots oder auch andere Werbemittel in Form von Werbebannern und damit verbundenen Informationen.

Grundsätzlich könnte die Clienteinrichtung 10 bzw. die darauf ausgeführte Flashanwendung über die bereitgestellte Netzwerkverbindung direkt mit dem Werbemittelserver 20 Kontakt aufnehmen. Erfindungsgemäß ist in dem dargestellten Ausführungsbeispiel jedoch der Proxyserver 30 zwischengeschaltet, der die Kommunikation zwischen dem Flashplayer 10 und dem Werbemittelserver 20 abwickelt.

Für die Funktionalität des dargestellten Kommunikationssystems wird vorab kurz auf die Ausgangssituation eingegangen. Die Clienteinrichtung 10 bzw. der Nutzer möchte Informationen von einer bestimmten Website einer Netzwerkressource aufrufen. Diese Netzwerkressource stellt den Informationsserver 40 dar. Im konkreten Ausführungsbeispiel beinhaltet diese nutzerseitig gewünschte Information eine Audio- oder Videoinformation, die in Form einer Flashdatei auf dem Informationsserver 40 vorliegt und zum Abspielen an den Flashplayer 10 übertragen werden soll. Der Informationsserver 40 kann ein Webserver der ProSiebenSatl-Unternehmensgruppe sein, auf dem bestimmte Videoclips oder ganze Fernsehfolgen des üblichen Fernsehprogramms über das Internet abrufbar bereitgestellt werden. Die Bereitstellung dieser Videoinformationen wird mit Werbeinhalten verknüpft, um das in der Regel kostenlose Informationsangebot finanzieren zu können. Unter anderem können die Werbeinhalte und/oder Werbemittel vor, während oder im Anschluss an den eigentlichen Videoclip abgespielt werden, es existieren jedoch auch alternative Ausspielungsvarianten. Der Informationsserver 40 kann ein einzelner Server sein oder ein Serververbund sein. Der allgemeine Begriff Informationsserver umfasst im gezeigten Ausführungsbeispiel ein Content Delivery Network (CDN) 40, das ein Netz lokal verteilter und über das Internet verbundener Server ist, mit dem Inhalte (insbesondere große Mediendateien) ausgeliefert werden. Der "own origin" Server dient als Basis zur Verteilung der Inhalte über das CDN 40. Die Aufteilung zwischen CDN 40 und "own origin" Server 35 ist insbesondere dann sinnvoll, wenn das CDN von einem Dienstleister betrieben wird und der Informationsanbieter die zu verbreitenden Inhalte über seinen eigenen Server 35 ("own origin" Server) in das CDN 40 einbindet.

Wie eingangs bereits erläuterte wurde, unterbinden installierte Werbungsblocker ausgehende Verbindungen eines Webbrowsers zu einem Werbemittelserver. Dies kann beispielsweise anhand des initiierten Verbindungstyps erfolgen oder mittels Filterlisten, wodurch ausgehende Verbindungen auf deren Zieladresse geprüft werden, und, sofern die Zieladresse einem bekannten Werbemittelserver zuzuordnen ist, diese Verbindung durch den Werbeblocker unterbunden werden.

Gemäß der vorliegenden Erfindung wird der Verbindungsaufbau nicht mehr durch den Webbrowser der Clienteinrichtung 10 initiiert, sondern durch den ausgeführten Flashplayer. Ferner soll dieser nicht direkt mit dem Werbemittelserver 20 kommunizieren, sondern stattdessen über eine Flashsocket-Verbindung mit dem zwischengeschalteten Proxyserver 30, der im Folgenden auch als VAST-Proxy Service 30 bezeichnet wird.

Zu Beginn ruft die Clienteinrichtung den Quellcode der Website von dem Informationsserver 40 ab, der durch den Browser der Clienteinrichtung 10 zur Anzeige gebracht wird. Die auf der Website angebotenen Videoinhalte können mittels Flashplayer angezeigt werden, wobei der Flashplayer üblicherweise durch ein in den Quellcode eingebundenes Skript, insbesondere JavaScript, automatisch auf der Clienteinrichtung 10 aufgerufen wird, sobald der Nutzer ein Video zur Anzeige auswählt. Mit diesem Skript werden dem Flashplayer der Clienteinrichtung 10 gleichzeitig die Adresse des VAST-Proxy Servers 30 und gegebenenfalls notwendige Instruktionen zum Werbungsabruf mitgeteilt, worauf die Clienteinrichtung 10, d.h. der Flashplayer eine Flashsocket-Verbindung mit dem Flashsocket-Server 30 initiiert. Diese Verbindung erfolgt vorzugsweise über Port 80 der Clienteinrichtung.

Dadurch dass Werbemittelanfragen nicht mehr durch den Web-Browser der Clienteinrichtung 10, sondern stattdessen durch die Flashplayeranwendung ausgeführt werden, können diese nicht mehr durch einen im Browser als Plug-In installierten Werbeblocker erkannt und blockiert werden. Ein zweiter Punkt der Erfindung besteht darin, dass die Kommunikation zwischen dem Flashplayer der Clienteinrichtung 10 und dem VAST-Proxy-Service 30 auf sogenannten Flashsockets basieren. Flashsockets basieren auf einer TCP-Verbindung, die zwischen der Instanz des Flashplayers und einem auf dem VAST-Proxy-Service 30 ausgeführten Socket-Server geführt wird. Grundsätzlich kann für jede Werbemittelanfrage eine eigene Instanz, d.h. separate Flashsocket-Verbindung initiiert und genutzt werden. Sinnvoll kann jedoch nicht Verwendung einer gemeinsamen Flashsocket-Verbindung zumindest für eine Gruppe von Werbemittelanfragen sein.

Für die Initiierung eines Flashsockets ist zwischen Clienteinrichtung 10 und Proxy-Service 30 ein vorgeschalteter Autentifizierungsvorgang notwendig, der die Zulässigkeit eines Socketverbindungsaufbaus zwischen den beiden Komponenten prüft. Über einen geeigneten Port wird zunächst eine Policy-Anfrage des Flashplayers 10 an den VAST-Proxy Service gestartet, der die Anfrage mit der Übermittelung des lokal hinterlegten Policy-Files an die Clienteinrichtung 10 über Port 80 antwortet. Als geeignete Ports gelten diejenigen Portnummern, die von relevanten Sicherheitsmechanismen des Clients 10, wie installierte Firewalls, üblicherweise nicht blockiert werden. Ist der Authentifizierungsvorgang erfolgreich, kann ein Flashsocket zwischen Flashplayer 10 und dem Socket-Server des VAST-Proxy-Services 30 aufgebaut werden. Praktisch ist für jede Instanz ein Authentifizierungsvorgang notwendig.

Über diesen Verbindungskanal wird nunmehr die eigentliche Anfrage nach Werbeinhalten und/oder Werbemitteln (Ad-Request) des Flashplayers der Clienteinrichtung 10 nicht direkt an den Werbemittelserver 20, sondern stattdessen an den VAST-Proxy-Service 30 übermittelt. Noch vor dem Absenden der Anfrage prüft der Player zunächst, ob ein targeting-Cookie zum Zweck des Targetings und Frequency-Cappings im Cookie-Speicher der Clienteinrichtung 10 vorliegt. Dieses targeting-Cookie dient zur Profilierung und Abschätzung der voraussichtlichen Produktinteressen des Nutzers und wird von einem externen Targeting-Server 15 erzeugt. Darüber hinaus wird das targeting-Cookie ebenfalls zum Frequency-Capping eingesetzt, um die Häufigkeit zu steuern, mit der einem einzelnen Client eine bestimmte Werbung gezeigt wird. Auf Grundlage dieses targeting-Cookies können Werbetreibende Werbung und Empfehlungen an vermutete Zielgruppen ausliefern.

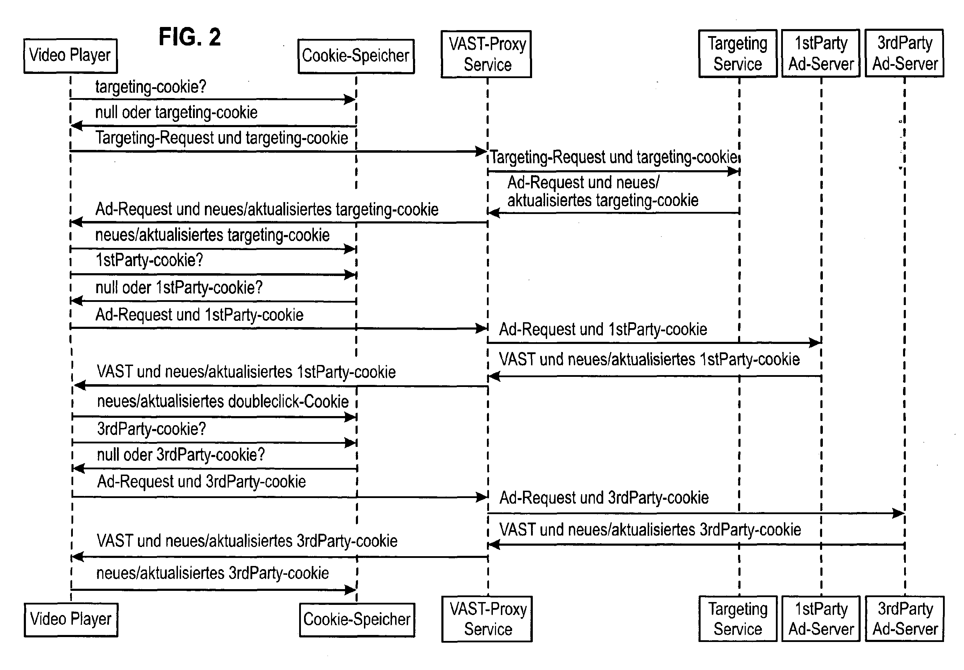

Der Player sendet sodann über die Flashsocket-Verbindung eine targeting-Anfrage an den VAST-Proxy Server 30, die von diesem an den targeting-Service 15 weitergereicht wird. Sofern im Speicher der Clienteinrichtung 10 bereits ein targeting-Cookie verfügbar ist, wird dieses zwecks Aktualisierung an den targeting-Service 15 zusammen mit der targeting-Anfrage versendet. Als Reaktion aktualisiert der targeting-Service 15 das targeting-Cookie bzw. erstellt erstmals ein targeting-Cookie für die anfragende Clienteinrichtung 10. Ferner erstellt der targeting-Server 15 eine Anfrage nach auf den Nutzer der Clienteinrichtung 10 zugeschnittenen Werbemitteln und/oder Werbeinhalten (Ad-Request) und leitet diesen der Clienteinrichtung 10 zusammen mit dem aktualisierten targeting-Cookie über den VAST-Proxy Service 30 zu, wobei die Übertragung vom Server 30 an die Clienteinrichtung 10 über die Flashsocket-Verbindung läuft. Das neue bzw. aktualisierte targeting-Cookie wird im Cookie-Store der Clienteinrichtung 10 gespeichert. Der Ablauf ist ebenfalls dem Nachrichtendiagramm der Figur 2 zu entnehmen

Nach dem Aktualisierungsvorgang des targeting-Cookies versendet der Flashplayer 10 die Anfrage nach Werbemitteln und/oder Werbeinhalten zusammen mit zugeordneten Cookies über die Flashsocket-Verbindung an den VAST-Proxy Service 30, der die Anfrage (Ad Request) an den adressierten Werbemittelserver 20 weiterreicht. Der Werbemittelserver 20 antwortet hier mit einer entsprechenden Informationsdatei, auch als VAST-File bezeichnet, die Informationen darüber beinhaltet, von welcher Adresse die Clienteinrichtung 10 die angefragten Werbeinhalte und/oder Werbemittel abrufen kann. Das VAST-File enthält neben den Links zu den Werbemitteln notwendige Informationen darüber, in welcher Form die Werbung zu welchem Zeitpunkt auf der Clienteinrichtung 10 eingeblendet werden soll. Ferner enthält das VAST-File auch Instruktionen für sogenannte Tracking Pixel Anfragen, die zu genau definierten Zeiten, insbesondere Abspielzeitpunkten des Werbeinhaltes/Werbemittels, vom Client auszuführen sind. Für die Tracking Pixel Anfragen wird eine Kommunikation mit dem Ad-Tracking System 22 initiiert. Die auszuführenden Anfragen des Clients dienen als Beweis für die Auslieferung des Werbeinhaltes/Werbemittels.

Es besteht die Möglichkeit, dass die erste Anfrage nach Werbemitteln/Werbeinhalten im VAST-Proxy Server 30 validiert wird, beispielsweise durch vergleich des adressierten Werbemittelservers 20 mit einer lokal hinterlegten Whitelist.

Die Zieladresse innerhalb der VAST-Datei zeigt beispielsweise auf einen Speicherplatz der an dem Werbemittelserver 20 angeschlossenen Datenbank 21. Das auf dem VAST-Proxy-Service 30 empfangene VAST-File des Werbemittelservers 20 wird jedoch nicht sofort an den Flashplayer 10 über die Socket-Verbindung übertragen, sondern zunächst ausgewertet und gegebenenfalls modifiziert. Im Einzelnen prüft der VAST-Proxy-Service 30, ob die angefragten Werbemittel und/oder Werbeinhalte bereits früher einmal angefragt worden sind und entweder auf dem VAST-Proxy-Service 30 oder auf dem Informationsserver 40 zum Abruf verfügbar sind. Ist dies nicht der Fall, stößt der VAST-Proxy-Service 30 einen progressiven Download der im VAST-File definierten Werbeinhalte und/oder Werbemittel von der Datenbank 21 des Werbemittelservers 20 an. Im Anschluss werden die Dateien von dem VAST-Proxy-Service 30 über eine FTP-Verbindung an den zwischengeschalteten Server 35 übertragen. Vorzugsweise wird eine verschlüsselte FTP-Verbindung eingesetzt, beispielsweise sFTP oder FTPs. Von dem zwischengeschalteten Server 35 werden diese Dateien weiter an den Informationsserver 40 geleitet.

Zusätzlich wird im VAST-Proxy-Service 30 das empfangene VAST-File des Werbemittelservers 20 dahingehend angepasst, sodass die entsprechende Zieladresse auf die Werbeinhalte und/oder Werbemittel von dem Datenbanksystem 21 auf den Informationsserver 40 geändert wird.

Zusätzlich kann es denkbar sein, das weitere Informationen des VAST-Files geändert werden, so zum Beispiel die Zieladressen auf ein sogenanntes Ad-Tracking-System 22 oder auch eine VAST-Wrapper-Adresse. Der Flashplayer 10 wird dabei durch das VAST-File angewiesen, Informationen über das Nutzerverhalten während dem Abspielen von Werbeinhalten und/oder Werbemitteln an das Tracking-System 22 zu senden. Beispielsweise soll der Flashplayer 10 berichten, wenn der Nutzer einen im Werbemittel enthaltenen Hyperlink aufruft. Die Zieladresse des Tracking-Systems 22 wird ebenfalls über den VAST-Proxy Service 30 an das Tracking-System 22 weitergeleitet. Üblicherweise kommt es während der Abspieldauer einzelner Werbemittel/Werbeinhalten wiederholt zu Übertragungen an das Tracking-System 22. Zur Reduzierung der Anzahl an Authentifizierungsvorgängen für Flashsocket-Verbindungen ist es sinnvoll, diesen nur initial bei der ersten Anfrage durchzuführen. Die im VAST-File enthaltenen Zieladressen des Tracking-Systems 22 werden im VAST-Proxy Server 30 vorzugsweise um einen AuthentifizierungsToken ergänzt, um derartiger Verbindungen für die Zukunft zu validieren.

Das modifizierte VAST-File wird über die Socketverbindung an den Flashplayer der Clienteinrichtung 10 übertragen, der VAST-Datei auswertet und die angefragten Werbemittel und/oder Werbeinhalte per RTMP-Verbindung von dem Informationsserver 40 abruft. Nach Erhalt werden die Werbeinhalte/Werbemittel an der im VAST-File vorgegebenen Stelle des eigentlichen Videoinhaltes abgespielt.

Diese Vorgehenseise hat den Vorteil, dass die Zieladresse der Werbeinhalte und/oder Werbemittel auf die Adresse des Informationsservers 40 und damit auf die ursprünglich vom Benutzer abgerufene Zieladresse fällt. Ein installierter Werbeblocker kann daher diese Zieladresse nicht mehr einem Werbemittelserver 20 zuordnen und dadurch die Übertragung der Werbeinhalte und/oder Werbemittel vom Informationsserver 40 zur Clienteinrichtung 10 unterbinden. Zwar könnte grundsätzlich jede Verbindung blockiert werden, dies würde jedoch dazu führen, dass neben den Werbeinhalten und/oder Werbemitteln auch die eigentlich abzurufende Information von dem Informationsserver 40 blockiert werden würde. Zwar besteht die Möglichkeit, dass ein installierter Werbeblocker nur die spezifischen Pfade zu einzelnen Werbemitteln auf dem Informationsserver 40 blockiert. Diese Maßnahme wäre aber leicht abzufangen, da es für den Werbeanbieter ohne großen Aufwand möglich ist, die Werbemittel im VAST-Proxyserver täglich umzubenennen.

Derselbe Vorteil wird für die ausgehende Datenübertragung vom Flashplayer zum Tracking-System 22 erreicht.

Es besteht die Möglichkeit, dass das erzeugte VAST-File des Werbemittelservers 30 keine Zieladresse auf Werbemittel und/oder Werbeinhalte beinhaltet, sondern stattdessen eine Umleitung auf einen weiteren Werbemittelserver umfasst. Diese Umleitungsadresse (VAST-Wrapper Adresse) würde sodann ebenfalls durch den VAST-Proxy Service 30 durch die eigene Adresse ersetzt und das VAST-File dem Flashplayer zugeleitet werden. In Reaktion auf das empfangene VAST-File würde seitens des Flashplayer eine weitere Anfrage nach Werbemitteln und/oder Werbeinhalten über die Flashsocket-Verbindung an den VAST-Proxy Service 30 gesendet werden, die dieser dann an den weiteren Werbemittelserver weiterleitet. Der nachfolgende Ablauf entspricht dann voranstehend beschriebenen Verfahrensschritten. Diese Variante ist dem Nachrichtendiagramm der Figur 2 zu entnehmen.

## Patentansprüche

1. Verfahren zum Ausliefern von Werbeinhalten und/oder Werbemitteln von einem Werbemittelserver an eine Clienteinrichtung, wobei
- die Clienteinrichtung eine Anfrage nach Werbeinhalten und/oder Werbemitteln über eine initiierte Flashsocket-Verbindung an einen Flashsocket-Server übermittelt,
- der Flashsocket-Server mit dem in der Anfrage adressierten Werbemittelserver kommuniziert, um eine Übertragung der von der Clienteinrichtung angefragten Werbeinhalte und/oder Werbemittel anzustoßen und
- wobei die Übertragung der abgefragten Werbeinhalte und/oder Werbemittel von dem Werbemittelserver an die Clienteinrichtung über den Flashsocket-Server und die zwischen Flashsocket-Server und Clienteinrichtung aufgebaute Flashsocket-Verbindung erfolgt und/oder
- die Übertragung der Werbeinhalte und/oder Werbemittel an wenigstens einen Drittserver erfolgt, von dem die Werbemittel und/oder Werbeinhalte durch die Clienteinrichtung abrufbar sind.

2. Verfahren nach Anspruch 1, **dadurch gekennzeichnet, dass** eine auf der Clienteinrichtung ausgeführte Flash-Anwendung, insbesondere ein Flash-Player, die Verbindung zum Flashsocket-Server initiiert.

3. Verfahren nach einem der vorhergehenden Ansprüche, **dadurch gekennzeichnet**, vor dem Aufbau der Flashsocket-Verbindung durch die Clienteinrichtung, insbesondere den Flash-Player, ein Authentifizierungsprozess angestoßen wird, um die Berechtigung einer Flashsocket-Verbindung zwischen Clienteinrichtung und Flashsocket-Server zu prüfen.

4. Verfahren nach einem der vorhergehenden Ansprüche, **dadurch gekennzeichnet, dass** der Drittserver einem Informationsserver, beispielsweise Webserver, entspricht, von dem die Clienteinrichtung nutzergesteuert Informationen abgerufen hat und/oder abrufen möchte.

5. Verfahren nach einem der vorhergehenden Ansprüche, **dadurch gekennzeichnet, dass** der Flashsocket-Server bei einer eingehenden Anfrage einer Clienteinrichtung prüft, ob die angefragten Werbeinhalte und/oder Werbemittel bereits auf dem Drittserver verfügbar sind und eine Übertragung nur dann initiiert, falls diese noch nicht verfügbar sind.

6. Verfahren nach einem der vorhergehendenden Ansprüche, **dadurch gekennzeichnet, dass** die Werbeinhalte und/oder Werbemittel über den FlashsocketServer an den Drittserver übertragen werden, wobei vorzugsweise für die Datenübertragung zum Flashsocket-Server ein progressiver Download verwendet wird und bevorzugt die Übertragung zum Drittserver per FTP-Protokoll erfolgt.

7. Verfahren nach einem der vorhergehenden Ansprüche, **dadurch gekennzeichnet, dass** die in der Anfrage der Clienteinrichtung enthaltene Zieladresse des Werbemittelservers gegen eine White- und/oder Blacklist mit validierten und/oder gesperrten Werbemittelservern geprüft wird.

8. Verfahren nach einem der vorangehenden Ansprüche, **dadurch gekennzeichnet, dass** der Clienteinrichtung in Reaktion auf die Anfrage nach Werbeinhalten und/oder Werbemitteln durch den Flashsocket-Server über die Flashsocket-Verbindung eine Informationsdatei zugesendet wird, die wenigstens eine Zieladresse des Flashsocket-Server und/oder Drittservers zum Abruf der Werbeinhalte und/oder Werbemittel umfasst.

9. Verfahren nach Anspruch 8, **dadurch gekennzeichnet, dass** die Informationsdatei originär von dem Werbemittelserver in Reaktion auf die Anfrage nach Werbeinhalten und/oder Werbemitteln generiert wird, wobei der FlashsocketServer wenigstens eine in der originären Informationsdatei enthaltene Zieladresse durch die Zieladresse des Flashsocket-Servers und/oder des Drittservers ersetzt.

10. Verfahren nach Anspruch 9, **dadurch gekennzeichnet, dass** die Informationsdatei ein oder mehrere Zieladressen zu ein oder mehreren Dienstleistungsservern beinhaltet, insbesondere Dienstleistungsserver für die Aufzeichnung ein oder mehrere für die Auslieferung von Werbeinhalten und/oder Werbemittel relevanter Parameter, wobei alle oder zumindest einige diese Zieladressen durch temporäre Zieladressen oder die Zieladresse des Flashsocket-Servers ersetzt werden und/oder um einen Authentifizierungstoken ergänzt werden.

11. Verfahren nach einem der vorangehenden Ansprüche, **dadurch gekennzeichnet, dass** die Werbemittel und/oder Werbeinhalte Videodaten sind, insbesondere Videodaten eines Werbefilms, besonders bevorzugt lineare Videodaten, die für eine preroll, midroll, postroll, sponsor presplit oder postsplit Einblendung an der Clienteinrichtung geeignet sind.

12. Verfahren zum Ausliefern von Werbeinhalten und/oder Werbemitteln von einem Werbemittelserver an eine Clienteinrichtung, wobei
(a) die Clienteinrichtung eine Anfrage nach Werbeinhalten und/oder Werbemitteln an einen Proxy-Server übermittelt,
(b) der Proxy-Server mit dem Werbemittelserver kommuniziert, um eine Übertragung der von der Clienteinrichtung angefragten Werbeinhalte und/oder Werbemittel anzustoßen und
(c) wobei die Werbeinhalte und/oder Werbemittel an wenigstens einen Drittserver übertragen werden, von dem die Werbemittel und/oder Werbeinhalte durch die Clienteinrichtung abrufbar sind.

13. Verfahren nach Anspruch 12, wobei das Verfahren zusätzlich durch die Merkmale der Ansprüche 4 bis 11 gekennzeichnet ist.

14. Kommunikationssystem mit wenigstens einer Clienteinrichtung, wenigstens einem Flashsocket- bzw. Proxyserver, wenigstens einem Werbemittelserver und gegebenenfalls wenigstens einem Drittserver, wobei die Komponenten zur Durchführung des Verfahrens gemäß einem der vorhergehenden Ansprüche geeignet sind.

15. Proxy-Server oder Flashsocket-Server geeignet zur Durchführung eines Verfahrens gemäß einem der Ansprüche 1 bis 11 oder 12 bzw. 13.
